# EUROPEAN PATENT APPLICATION

(11) **EP 4 483 706 A1**
(43) Date of publication of application: **01.01.2025**
(21) Application number: 23182931.8
(22) Date of filing: 30.06.2023
(51) Int. Cl.: A01G 9/24, A01G 31/04, G06Q 50/02

(54) **SMART PLANT GROWTH DEVICE WITH DIGITAL TWIN MODELING FOR PRECISION AGRICULTURE**

(30) Priority: 28.06.2023 PT 2023118767
(71) Applicant: Universidade Do Porto, 4099-002 Porto (PT)
(72) Inventor: de Santana Pena, Danilo, 4200-465 PORTO\ (PT); Rodrigues Aguiar, António Pedro, 4200-465 PORTO (PT); Ferreira Lobo Pereira, Fernando Manuel, 4200-465 PORTO (PT); Hadj-Abdelkader, Oussama, 4200-465 PORTO (PT); Bouzebiba, Hadjer, 4200-465 PORTO (PT); Binandeh Dehaghani, Parinaz, 4200-465 PORTO (PT)
(74) Representative: Patentree

(57) **Abstract**

A system for growing plants for modelling a farming environment, the system comprising: an enclosed device for growing the plants for modelling the farming environment; sensors placed in the farming environment for acquiring plant growth parameters data from the farming environment; computer configured for simulating the farming environment with the acquired plant growth parameters data to obtain simulated plant growth parameters; the computer further configured for mapping the simulated plant growth parameters to plant growth parameters of the enclosed device; the computer further configured for applying the mapped parameters to the enclosed device.

## Description

### Technical field

The present disclosure relates to system comprising a portable compact device for growing plants. The device further comprises a plant growth compartment in which the plant growth conditions are monitored and controlled according to the user's requirements and insulated from external conditions. The growth conditions are monitored and controlled through an electro-mechanical system comprising a microcomputer, sensors and actuators. Additionally, the system includes a procedure for mapping based on a data-driven approach that can replicate growth conditions to and from a large-scale farming environment.

### Background

In the face of mounting global challenges, including an increasing population and environmental changes, there is an escalating need for innovative tools in the realm of precision agriculture. Large-scale farming operations, such as vertical and smart indoor farms, have emerged as promising solutions for space-effective and controlled crop production. However, these farming methods present complexities for direct experimentation due to their scale, potential disruption to ongoing production, and the intricacy of accurately controlling and monitoring numerous environmental variables. Moreover, the quest for sustainable and efficient farming methods necessitates a deeper understanding and continuous adaptation of these parameters, calling for real-time monitoring, advanced analytics, and the ability to conduct precise and replicable experiments.

These facts are disclosed in order to illustrate the technical problem addressed by the present disclosure.

### General Description

The present disclosure relates to a portable compact device for growing plants.

In this context, the motivation arises for a compact, programmable system that can simulate large-scale farming environments for reliable and non-intrusive research, leveraging the potential of Al and other techniques for advanced control, automation, and knowledge extraction, ultimately contributing to the advancement and sustainability of modern agriculture.

An aspect of the present disclosure relates to a plant growing system for modelling a farming environment, the system comprising:
an enclosed device for growing the plants for modelling the farming environment; sensors placed in the farming environment for acquiring plant growth parameters data from the farming environment; and
a computer configured for simulating the farming environment with the acquired plant growth parameters data to obtain simulated plant growth parameters;
wherein the computer is further configured for mapping the simulated plant growth parameters to plant growth parameters of the enclosed device, and for applying the mapped parameters to the enclosed device.

In an embodiment, the plant growth parameters include temperature, humidity, light intensity, soil temperature, soil moisture, or combinations thereof.

In an embodiment, the mapping comprises applying a convolutional neural network (CNN), a long short-term memory network (LSTM), or a fully connected neural network (FCN), to input data to obtain the plant growth parameters of the enclosed device.

In an embodiment, the CNN or LSTM comprises two input layers: a first input layer for sensor data of the farming environment and a second input layer for image data corresponding to the farming environment; and the FCN comprises a combined input layer for sensor data of the farming environment and image data corresponding to the farming environment.

In an embodiment, the mapping comprises applying a predictive model of an error in a target variable predicted from simulated plant growth parameters and from plant growth parameters of the enclosed device, to obtain a measure of discrepancy between the farming environment and the enclosed device; in particular the predictive model comprising an image data input for receiving plant growth images from the farming environment and/or enclosed device.

In an embodiment, the system of the present disclosure further comprising one or more actuators for applying plant growth parameters to the enclosed device, wherein the computer is further configured for applying an optimizer to optimize plant growth parameters to be applied to the enclosed device, wherein the predicted error in the target variable is used as an input of said optimizer, which is configured for minimizing said error in the target variable by adjusting said plant growth parameters to be applied by said one or more actuators.

In an embodiment, the simulation is a digital twin simulation comprising:
an information layer comprising data acquired from the sensors placed on the farm environment;
a knowledge layer comprising organized data inputs acquired from the data acquired;
a twinning layer comprising a mathematical representation of the farm environment obtained using modelling.

In an embodiment, the data acquired from the sensors includes image data obtained from the farm environment, in particular wherein the image data comprises plant area, greenness, texture features, number of leaves, shape features, or combinations thereof, in particular the shape features comprising vegetation area perimeters, compactness, elongations, convexities and aspect ratios.

In an embodiment, the enclosed device comprises:
heating, ventilation and air conditioning system;
irrigation system, in particular the irrigation system comprising drainage, irrigation spray, irrigation pump, irrigation valves;
lights;
sensors;
communication means, in particular wireless communication means;
microcomputer.

In an embodiment, the enclosed device of the present disclosure further comprises an outer layer, an inner layer, an insulation layer, and an uninsulated compartment.

In an embodiment, the enclosed device of the present disclosure further comprises a camera for obtaining image data of plants growing in the enclosed device.

In an embodiment, the heating, ventilation and air conditioning system comprises heat dissipators, ventilators, air conditioners, air exhaust.

In an embodiment, the sensors comprise soil temperature sensors, soil moisture sensors, temperature sensors, humidity sensors, carbon dioxide sensor, light intensity sensor.

An aspect of the present disclosure relates to a method for growing plants in an enclosed device for modelling a farming environment, the method comprising:
acquiring plant growth parameters data from sensors placed in a farming environment;
simulating the farming environment with the acquired plant growth parameters data to obtain simulated plant growth parameters;
mapping the simulated plant growth parameters to obtain plant growth parameters of the enclosed device; and
applying the mapped parameters to the enclosed device.

In an embodiment, in the method of the present disclosure, the mapping is designed by convolutional neural network, long short-term memory network, or fully connected network.

An aspect of the present disclosure relates to a device for growing plants, comprising an outer structure layer (1), an inner structure layer (2), an insulation layer (3), a door on the front side (4), an uninsulated compartment (5), a HVAC system (6), an exhaust system (7), a substrate tray (8), an irrigation system (9), a drain system (10), a lighting system (11), as well as a control, monitoring and communication system (12).

Another aspect of the present disclosure relates to a system for growing plants for modelling a farming environment, the system comprising:
an enclosed device for growing the plants for modelling the farming environment;
sensors placed in the farming environment for acquiring plant growth parameters data from the farming environment;
computer configured for simulating the farming environment with the acquired plant growth parameters data to obtain simulated plant growth parameters;
the computer further configured for mapping the simulated plant growth parameters to plant growth parameters of the enclosed device;
the computer further configured for applying the mapped parameters to the enclosed device.

In an embodiment, in the system, the plant growth parameters are temperature, humidity, light intensity, soil temperature, soil moisture, or combinations thereof.

In an embodiment, in the system, the device comprises:
heating, ventilation and air conditioning system;
irrigation system;
lights;
sensors;
communication means;
microcomputer.

In an embodiment, the communication means is a wireless communication means.

In an embodiment, the device further comprises a substrate holder.

In an embodiment, the device further comprises a camera.

In an embodiment, the heating, ventilation and air conditioning system comprises heat dissipators, ventilators, air conditioners, air exhaust.

In an embodiment, the lighting system comprises LED lights.

In an embodiment, the sensors comprise soil temperature sensors, soil moisture sensors, temperature sensors, humidity sensors, carbon dioxide sensor, light intensity sensor.

In an embodiment, the irrigation system comprises drainage, irrigation spray, irrigation pump, irrigation valves.

In an embodiment, the microcomputer further comprises an LCD display and an LCD controller.

Another aspect of the present disclosure relates to a method for growing plants in an enclosed device for modelling a farming environment, the method comprising:
acquiring plant growth parameters data from sensors placed in a farming environment;
simulating the farming environment with the acquired plant growth parameters data to obtain simulated plant growth parameters;
mapping the simulated plant growth parameters to the plant growth parameters of the device.

In an embodiment, in the method, the parameters are temperature, humidity, light intensity, soil temperature, soil moisture, or combinations thereof.

In an embodiment, the device of the present disclosure further comprises a digital twin framework which enables the user to conduct precise experiments and real-time monitoring of small plants, like microgreens, while being able to digitally mimic larger-scale environments, where plants of the same species are produced, such as in vertical farms, smart plant factories, or greenhouses. The implementation of a digital twin framework allows the device of the present disclosure to replicate the conditions of larger environments within its compact and portable structure. This mapping between the device and the larger physical environment can be programmatically created using various functions or Al models, offering flexibility in mimicking diverse environments.

In an embodiment, the device of the present disclosure is compact, small, portable, and can be placed in a laboratory or an office.

In an embodiment, the device of the present disclosure is equipped with a central processing unit, which can be a microcomputer or microcontroller, sensors measuring air temperature, humidity, carbon dioxide, light intensity, soil or substrate quality to monitor the plant's environmental conditions, and a camera to monitor the plant's growth and health condition.

In an embodiment, the sensors and the camera are connected to the microcomputer that reads the sensors in real-time, adjusts the actuators, and sends the values to the cloud or the central processing unit for processing and visualization to the user. On an external computer, the sensor data and camera images can be used for monitoring and logging the experiments, training Al models, and changing control values that are sent back to the microcomputer of the grow box, which adjusts the actuators accordingly. If the obtained results based on the newly computed values are satisfying, the growth conditions are replicated in the indoor farming environment using the mapping system.

In an embodiment, the device of the present disclosure further comprises actuators, LED lights for lighting, a HVAC system, a humidifier for environment control, a heating mat for stimulating seed germination, and a pump for fertigation.

Some advantages of the device of the present disclosure are:
a. Reduced Experimentation Costs: By creating a scaled-down, controlled environment within the growth chamber of the device, costly industrial equipment and the associated energy consumption within the plant factories can be minimized. Moreover, the system can operate outside the large-scale production environment, thereby avoiding disruption to ongoing farming operations and reducing the need for on-site engineers.
b. Improved Experimental Control and Replicability: The programmability of the growth chamber enables precise control of environmental parameters, thereby facilitating the conduct of finely-tuned experiments. The device of the present disclosure also allows multiple experimental conditions to be executed in parallel by employing multiple devices, thus significantly reducing experimental timescales and enhancing replicability.
c. Optimized Production: The device allows for the testing and validation of optimal growth conditions and plant manipulation techniques in a contained environment before transferring applying conditions to a large-scale farming operation. This approach paves the way for production optimization, enhancing product quality, increasing yield, and improving energy efficiency.
d. Minimized Human Intervention: The use of artificial intelligence and real-time monitoring reduces the necessity for manual supervision, thus minimizing potential disturbances to the environmental conditions caused by human presence and activity. The continuous data acquisition system with automation tools will provide an automatic adaptive system with low intervention.
e. Design Exploration: The device of the present disclosure can be used for plant factories, such as different ranges of values for the sensors and actuators, the layout for lighting and irrigation, and mapping functions between the device of the present disclosure and the farming. These findings can then inform the design of full-scale plant factories, contributing to increased productivity and energy efficiency.
f. Artificial intelligence (Al) and Data-Driven Optimization: The ability to log sensor data and use it for training Al models within the device of the present disclosure allows for ongoing learning and adaptation of environmental parameters together with the controlled chamber, contributing to the evolution of precision farming practices.
g. Facilitate Research: The device provides a versatile tool for research and development, paving the way for innovative studies in the field of plant biology, genetics, agriculture, and precision farming. Its programmable environment enables researchers to create specific conditions for studying the effects of various environmental factors on plant growth and development. The ability to mimic larger-scale environments further facilitates the extrapolation of the experimental results to real-world farming scenarios. Additionally, the digital data collected aids in the generation of comprehensive datasets for analysis and potential findings, thus contributing significantly to the advancement of scientific knowledge and its practical applications.

Further advantages of the device of the present disclosure:
a. Fully controlled and undisturbed environment in the device allows plant growth optimization experiments to be performed.
b. A programmable mapping system in the device allows replication of the optimized growth conditions in the plant factory or the indoor production facility.
c. The aeration system of the device is designed to avoid major problems in indoor production processes such as mould (fungus) proliferation and infection.
d. The growing environment in the device can be adapted to allow experiments on microgreens, small plants, and even edible or medicinal mushrooms to be performed.
e. The device has a small compact design which facilitates ease of use in research laboratories, work offices, and factory control rooms.

### Brief Description of the Drawings

The following figures provide preferred embodiments for illustrating the description and should not be seen as limiting the scope of invention.
Figure 1 shows the operation flowchart.
Figure 2 shows the digital twin and mapping functions.
Figure 3 shows the digital twin framework.

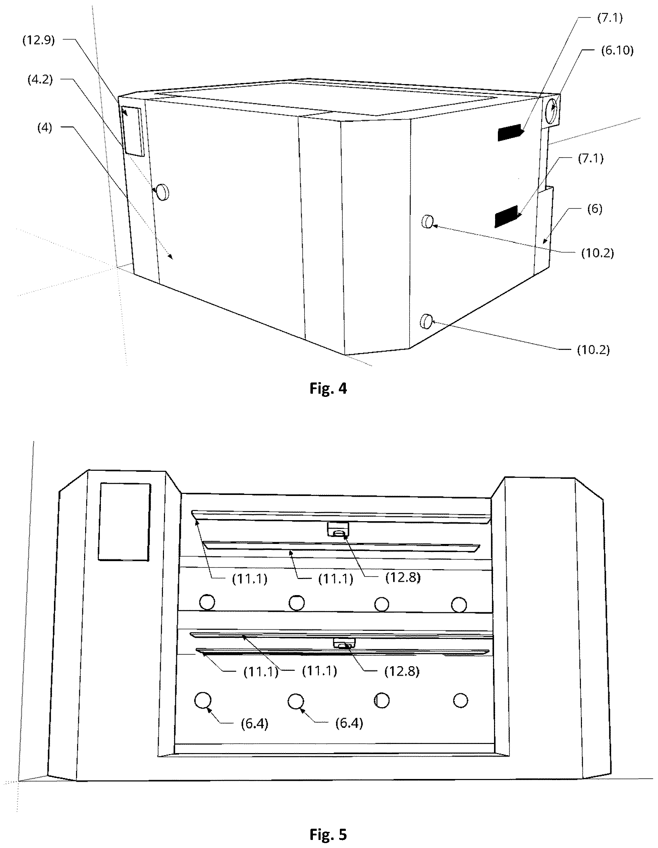

Figure 4 shows a prototype of the device of the present disclosure.
Figure 5 shows an open door view of the device of the present disclosure with two floors.

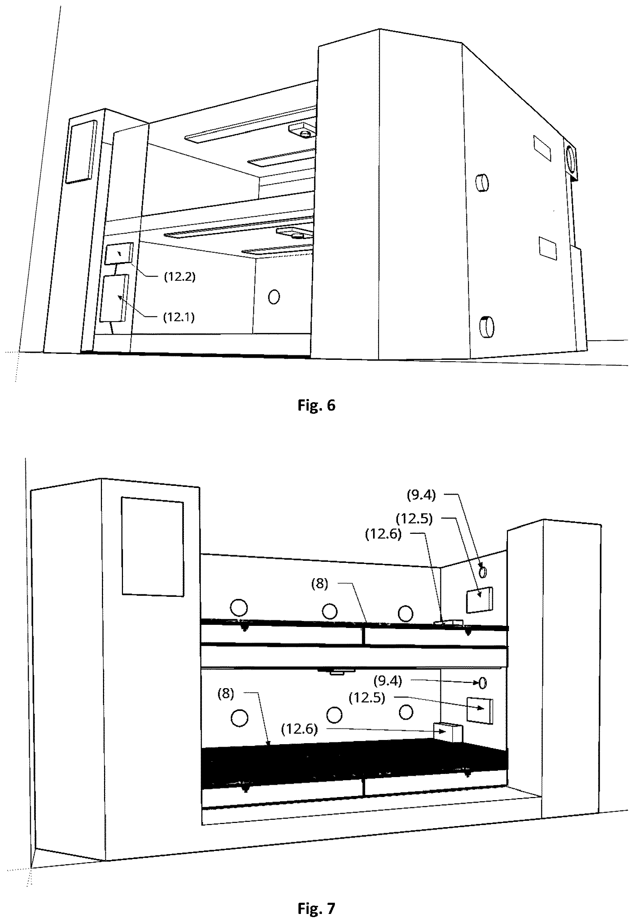

Figure 6 shows the internal components of the device of the present disclosure.
Figure 7 shows the sensors in the device of the present disclosure.

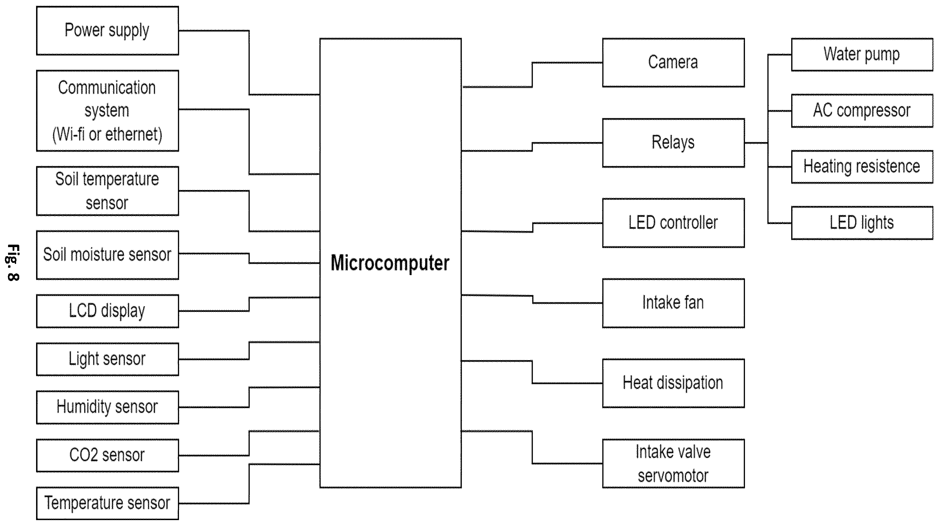

Figure 8 shows the electronic wiring scheme of the device of the present disclosure.

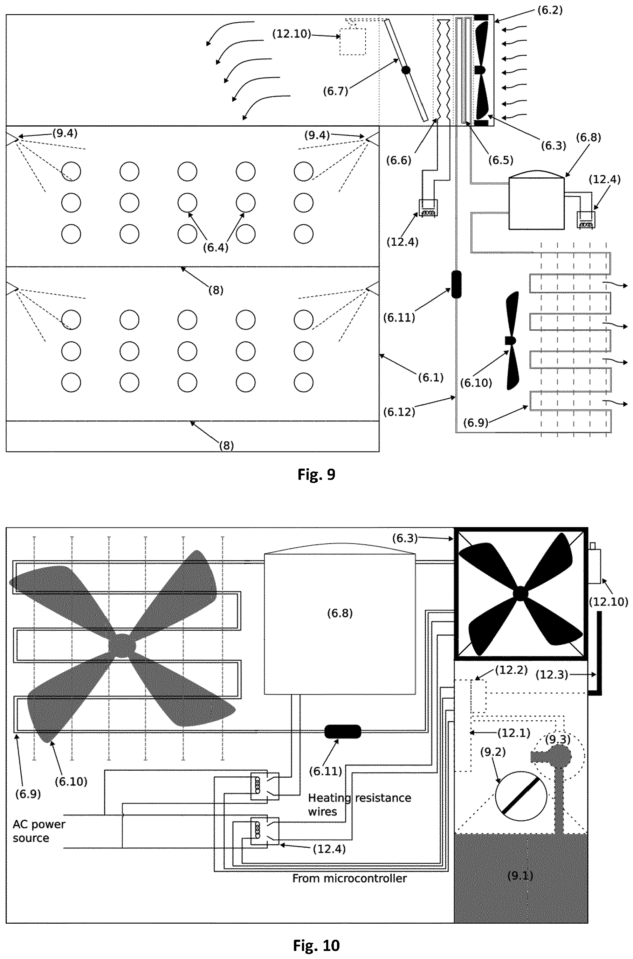

Figure 9 shows the HVAC system inside the device of the present disclosure including the air inlet, wiring, air circulation, and nozzle positions.
Figure 10 shows the HVAC system outside the device of the present disclosure including the irrigation system, and the connection of components.

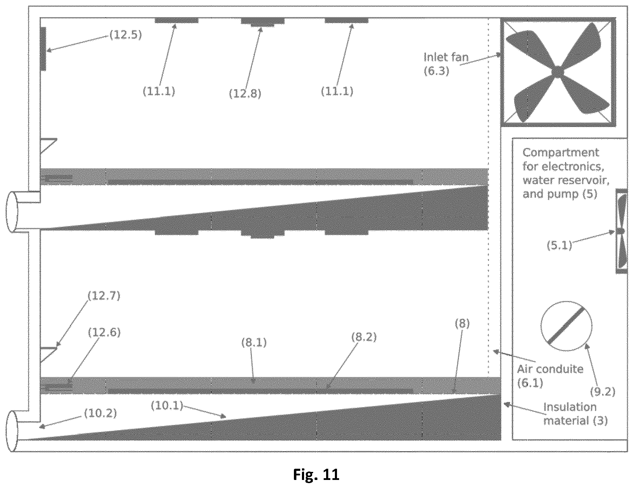

Figure 11 shows the insulation material location, air conduit, substrate tray and drain of the device of the present disclosure.
Figure 12 shows the mapping function established by utilizing advanced Artificial Intelligence (Al) models in an offline process.
Figure 13 shows the online process of utilization of the Al generated predictive model by an optimization process.

### Reference number list

(1): Outer structure layer of the box
(2): Inner structure layer of the box
(3): Insulation material
(4): Door to access the box
(4.1): Door rubber gasket
(4.2): Door handle
(4.3): Door lock
(5): Uninsulated compartment
(5.1): Ventilator for electronics
(6): HVAC system
(6.1): Air conduit layer
(6.2): Air inlet
(6.3): Inlet fan
(6.4): Inlet holes
(6.5): Evaporator radiator
(6.6): Heating resistance radiator
(6.7): Air valve
(6.8): Air Conditioning compressor
(6.9): Condenser
(6.10): Heat dissipation fan
(6.11): Expansion valve
(6.12): Air Conditioning tubes
(7): Exhaust system
(7.1): Exhaust hole
(7.2): Carbon filter
(8): Substrate tray
(8.1): Substrate
(8.2): Seeds heat mat
(9): Irrigation system
(9.1): Irrigation reservoir
(9.2): Reservoir lid
(9.3): Irrigation pump
(9.4): Mist nozzles
(9.5): Water tubes
(10): Drain system
(10.1): Inclined layer for drain
(10.2): Drain hole
(11): Lighting system
(11.1): LED lights
(11.2): LED driver
(12): Control, monitoring, and communication system
(12.1): Microcontroller/ Microcomputer
(12.2): Communication module
(12.3): Antenna
(12.4): Relays
(12.5): Air humidity, temperature, and carbon dioxide sensors
(12.6): Soil humidity and temperature sensors
(12.7): Light intensity sensor
(12.8): Camera
(12.9): LCD screen
(12.10): Servomotor for air valve

### Detailed Description

The present disclosure relates to a portable compact enclosed device for growing plants.

With the recent emergence of plant factories where plants are grown all year round on vertically stacked layers in a controlled environment, it is necessary to conduct experiments to study how to optimize the process in what concerns improving the product quality and quantity, increasing the productivity and the energy efficiency of the plant factory. Carrying out these experiments in the plant factory is very expensive because it requires using industrial equipment, wastes production time, and also requires the presence of engineers on the field where unpleasant temperatures and humidity exist. Moreover, the movement of people around the plants and the frequent doors opening and closing can disturb the environmental conditions and affect the plant's growth. The idea is to perform the experiments using inexpensive laboratory equipment outside the plant factory, and once the desired growth conditions and plant manipulation techniques are obtained and confirmed, they are directly applied in the plant factory without having to stop production for further analysis. This will reduce the amount of expensive industrial equipment like sensors, cameras, variable actuators, and controllers, which will reduce production costs. This will also allow the design of the plant factory in a manner that reduces manipulation tasks and improves the product, productivity, and energy efficiency. Multiple grow boxes with different experimental conditions can also be used to perform multiple experiments in parallel and reduce the execution time.

An aspect of the present disclosure relates to a device for growing plants, comprising:
an outer structure layer (1), an inner structure layer (2), an insulation layer (3), a door on the front side (4), an uninsulated compartment (5), a HVAC system (6), an exhaust system (7), a substrate tray (8), an irrigation system (9), a drain system (10), a lighting system (11), as well as a control, monitoring and communication system (12).

Another aspect of the present disclosure relates to a system for growing plants for modelling a farming environment, the system comprising:
an enclosed device for growing the plants for modelling the farming environment;
sensors placed in the farming environment for acquiring plant growth parameters data from the farming environment;
computer configured for simulating the farming environment with the acquired plant growth parameters data to obtain simulated plant growth parameters;
the computer further configured for mapping the simulated plant growth parameters to plant growth parameters of the enclosed device;
the computer further configured for applying the mapped parameters to the enclosed device.

In an embodiment, in the system, the plant growth parameters are temperature, humidity, light intensity, soil temperature, soil moisture, or combinations thereof.

In an embodiment, in the system, the device comprises:
heating, ventilation and air conditioning system; irrigation system; lights; sensors; communication means; microcomputer.

In an embodiment, the communication means is a wireless communication means.

In an embodiment, the device further comprises a substrate holder.

In an embodiment, the device further comprises a camera.

In an embodiment, the heating, ventilation and air conditioning system comprises heat dissipators, ventilators, air conditioners, air exhaust.

In an embodiment, the lighting system comprises LED lights.

In an embodiment, the sensors comprise soil temperature sensors, soil moisture sensors, temperature sensors, humidity sensors, carbon dioxide sensor, light intensity sensor.

In an embodiment, the irrigation system comprises drainage, irrigation spray, irrigation pump, irrigation valves.

In an embodiment, the microcomputer further comprises an LCD display and an LCD controller.

Another aspect of the present disclosure relates to a method for growing plants in an enclosed device for modelling a farming environment, the method comprising:
acquiring plant growth parameters data from sensors placed in a farming environment;
simulating the farming environment with the acquired plant growth parameters data to obtain simulated plant growth parameters;
mapping the simulated plant growth parameters to the plant growth parameters of the device.

In an embodiment, in the method, the parameters are temperature, humidity, light intensity, soil temperature, soil moisture, or combinations thereof.

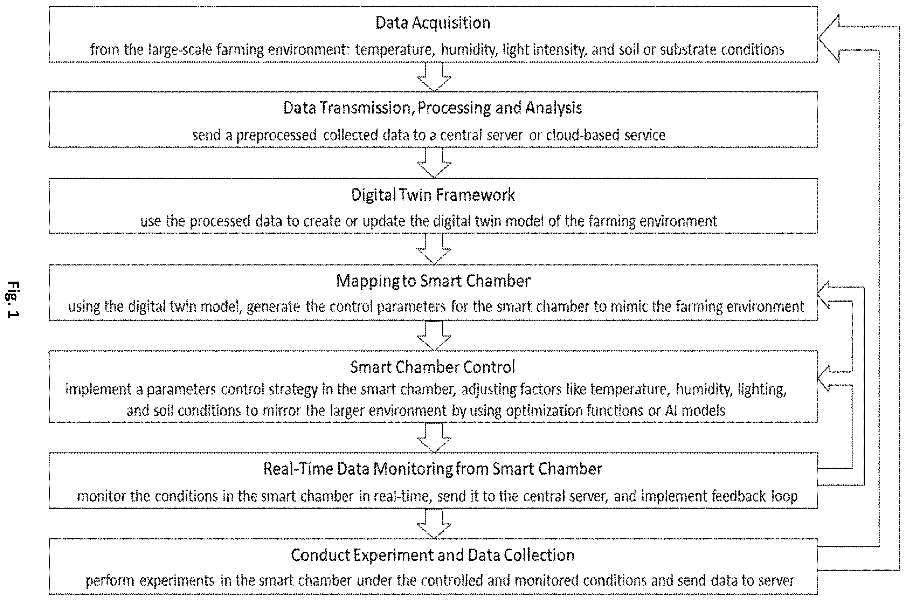

In an embodiment, the method begins with the acquisition of environmental data from a large-scale farming environment, including parameters such as temperature, humidity, light intensity, and soil or substrate conditions, as described in Figure 1. This data is then transmitted to a local central processing unit in a microcomputer or microcontroller in the enclosed device (smart chamber) and optionally sent to an external central server or cloud-based service for initial processing and analysis. A communication module in the device is in charge of the communication between the box and an external computer and can be wireless or not.

In an embodiment, using the processed data, a digital twin model of the farming environment is created or updated, understanding the environment and identifying patterns. Control parameters for the enclosed device (smart chamber) are then generated from this digital twin model to mimic the farming environment. These parameters are implemented in the enclosed device, adjusting conditions to mirror those of the larger environment based on a mapping function generated by optimization functions or Al models. Once the conditions are set, real-time monitoring of the enclosed device (smart chamber) begins, capturing similar environmental data to that collected from the farm. This data from the enclosed device (smart chamber) is then transmitted to the same central processing, and optionally to a central server or cloud service, for comparison and analysis with the data from the large-scale farming environment. This comparison aids in verifying the accuracy of the digital twin model and the effectiveness of the control strategy.

In an embodiment, if needed, the control parameters in the smart chamber are adjusted and optimized based on the feedback loop. Following these adjustments, the desired experiments are performed in the enclosed device (smart chamber) under controlled and monitored conditions. The resulting experimental data, which includes changes in plant growth and health under the given conditions, is then collected and transmitted to the central processing, central server, or cloud-based service.

In an embodiment, following the final feedback loop, the next stage is data analysis and insights extraction. This involves a comprehensive evaluation of the experimental results obtained from the smart chamber, focusing on understanding the impact of the controlled conditions on plant growth and health. Advanced analytical tools and techniques may be employed to draw meaningful insights from the data, revealing patterns and relationships that might not be immediately apparent. Such insights might include optimal environmental conditions for certain plant species, effective fertigation schedules, light intensity optimization, and many others. These insights not only increase the understanding of plant biology under precise conditions but are also valuable for large-scale farming operations.

In an embodiment, the method involves applying the gained insights and any recommended changes from the experiment to the large-scale farming environment. This could involve adjusting environmental controls such as temperature, humidity, and light intensity, changing fertigation schedules, or implementing new farming techniques based on the results observed in the smart chamber. As a result, the farming operation can effectively utilize the findings from the small-scale smart chamber experiments to optimize their large-scale production, contributing to enhanced productivity, energy efficiency, and crop quality.

In an embodiment, the method further comprises optional processes that can further enhance the functionality and convenience of the system. The first is data storage, which involves archiving all data from the farming environment, enclose device (smart chamber), and experiments in a central server or cloud-based service. This option facilitates future reference, ongoing analysis, and long-term trend identification, contributing to a data-rich resource for continual farming optimization.

In an embodiment, an optional feature is data visualization with a user interface. By incorporating a display interface within the enclosed device (smart chamber), real-time data and analysis results can be made readily accessible. This can aid quick decision-making and provide an immediate snapshot of the current conditions and experimental progress in the smart chamber. This interface would enable easy monitoring and control of the chamber, including manual adjustments of control parameters, thereby providing user-friendly means to interact with the system.

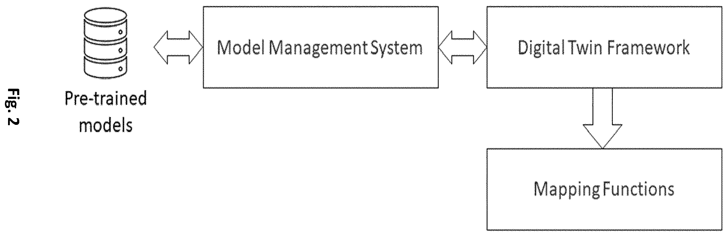

In an embodiment, the digital twin framework, initiates the collection of sensor data from the large-scale farming environment, as described in Fig. 2. This array of data is processed into a dynamic software model, which serves as a mirror image of the large-scale farming environment in the digital realm. The digital twin model incorporates various layers (data layer, information layer, knowledge layer, and twinning layer). The foundational layer comprises the raw sensor data from the farming environment, including environmental parameters such as temperature, humidity, light intensity, soil or substrate quality, and carbon dioxide levels. The information layer operates above the data layer, transforming raw data into a structured format via processing and cleaning methods. This structured data takes into account the global structure, considering and suggesting, for instance, the available sensor data in the enclosed device (smart chamber). Upon this layer, the knowledge layer stands, applying data analysis and pattern recognition to extract features and descriptors of the farming environment. The final layer, the twinning layer, generates the digital twin model, extrapolating a mathematical representation or Al model that captures the behaviour and characteristics of the farming environment. This multi-layered model serves as a flexible and adaptive tool to mimic various large-scale farming environments under distinct conditions.

In the digital twin framework, the information layer takes into account data points from sensors such as temperature, humidity, carbon dioxide, irrigation and nutrient delivery, and lighting. This layer can also include the manual historical crop yield and indoor farming setup information into the structured data such as the arrangement of plant units and the type of crops. In the knowledge layer, features are extracted from the sensors and cameras and organized together as data inputs. For the sensors, statistical features are extracted such as average, standard deviation, kurtosis, and higher statistical moments from the data points. Descriptors for periodicity are extracted by spectrum-based features such as energy and power estimation over the sensor data inputs. For the images, features extracted includes plant area, greenness, texture features, number of leaves, and shape features such as perimeters, compactness, elongations, convexities and aspect rations. Depending on the arrangement of the sensing system, data points measured and features extracted over time might be organized per plant units, plant sets, or convenient groups. In the twinning layer, the digital twin uses these data inputs, including the features, to create a mathematical representation of the large-scale environment by using modelling techniques. Statistical modelling analyses the relationship between the data inputs and features, such as statistical testing, correlations, and regressions. Statistical tests are used to evaluate whether there is enough evidence to reject a hypothesis of whether the environment input data causes a change in the growth or health process estimated by manual data input and features extracted. Correlation is computed between temperature or any other sensor data versus the crop yield represented by the image features. The same is performed for growth and health conditions like growth stages and pest populations, both represented by image features and manual annotation. In the same layer of the digital twin, linear and logistic regressions are used for modelling the variable environments against the manual historical data and the farming setup. Ensemble methods are used to find more complex relationship between data inputs against the features and annotations. Decision trees are used for scenarios where less data is used, at least one harvesting period, and insights are crucial for analysis. While random forests and XGBoost models are used for larger data, more than one harvesting period of acquisition, and high sample rate, at minimum of 1 sample per hour of each sensor node and camera acquisition. Finally, the digital twin provides a twin model data containing structured data with sensor data from the large-scale environment, data resulted from the statistical modelling analyses, and at least one target variable that represents the scenario evaluated. The target variable can be the growth stage for growth process monitoring, pest population for health conditions monitoring, or optimal crop period for subsequent crop yield analysis.

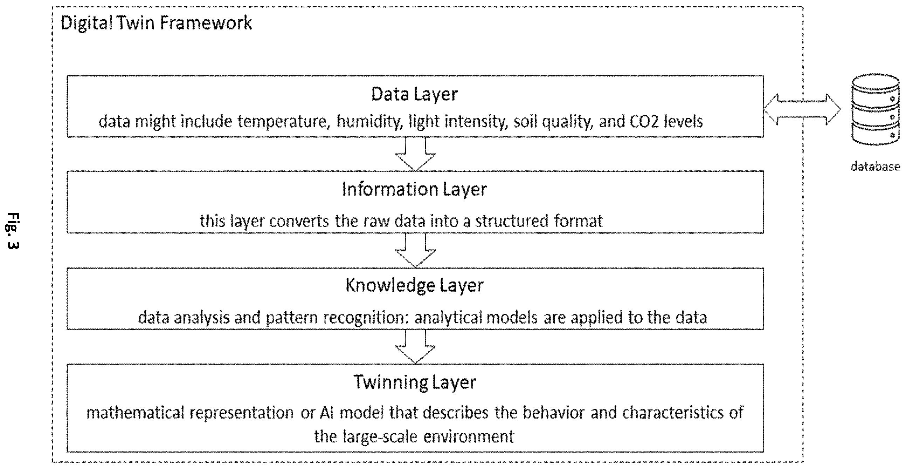

In an embodiment, to ensure the digital twin framework adapts to dynamic environments, a model management system is incorporated into it, described in Fig. 3. This system can store multiple pretrained models, selecting the appropriate one based on the context, such as variations in crop types, growing seasons, or any application requirements. It also has the capability to update or retrain models based on new data, keeping the models relevant as the farming environment evolves. Finally, the results are sent to the mapping functions, the fourth stage of the flow.

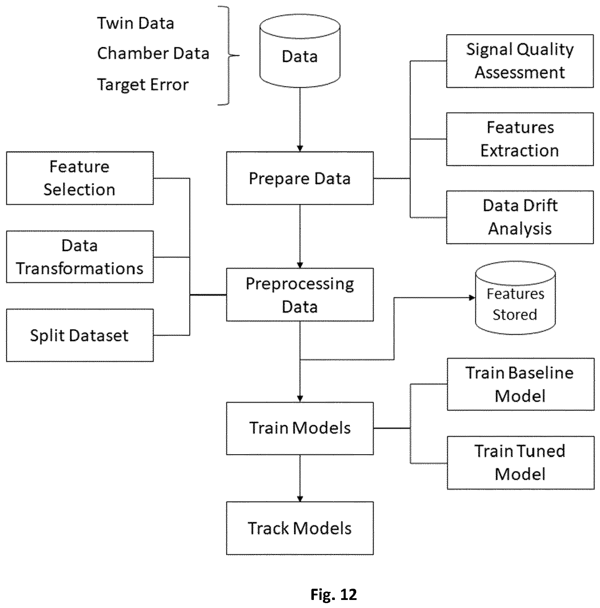

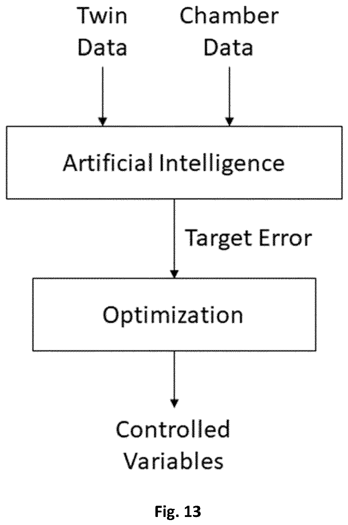

In an embodiment, the mapping function is established by utilizing advanced Artificial Intelligence (Al) models in an offline process delineated in Figure 12. On of the primary objectives of the Al is to generate a predictive model for the error in the target variable derived from twin data and from data obtained from the chamber device. Subsequently, in an online process described in Fig. 13, this prediction is utilized by an optimization algorithm, which calculates the optimal set of parameters for the chamber, thereby minimizing the error of the target variable error. The process of Al training necessitates the historical data from the digital twin models, data retrieved from the enclosed device (smart chamber), as well as an ongoing process of revalidation and retraining directed at the error of the target variable. This error represents the discrepancy between the target as indicated by the digital twin and the target as projected from the device. To illustrate, an error in the target variable may be the difference between the growth stage as estimated by the twin model and by the chamber device.

In an embodiment, the Al architecture is based on either a Convolutional Neural Network (CNN), a Long Short-Term Memory (LSTM) network, or a Fully Connected Network (FCN), utilizing data acquired from one or multiple harvesting periods.

In an embodiment, in the mapping stage, an Al is trained to fit models to obtain meaningful maps between the digital twin model and the cultivation in the enclosed device, by predicting a target error and optimizing possible values for the chamber parameters that minimizes such error.

In an embodiment, during the Al training phase the pipeline comprises a data acquisition stage The pipeline begins with data input from the digital twin model, data measured from the enclosed device (smart chamber), and the target variable error. A context or scenario is initially selected for each individual evaluation of the mapping, since different contexts, like growth and health processes, have different target variables.

In an embodiment, during the Al training phase, the pipeline comprises a data preparation stage. In the data preparation stage, signal quality assessment is performed in the data acquired from the enclosed device (smart chamber) through signal quality algorithms such as Signal-to-Noise Ratio (SNR) estimators based on minimum energy level detection of features amplitude and autocorrelation-based SNR estimation of the time series data, where the thresholds are obtained empirically for the features. Low level of energy values or anomalies in the autocorrelation might represent missing or weird data from the sensors due to disconnection, human intervention or uncalibrated sensors. Then, features are extracted, similar to those obtained in the digital twin modelling process. Data drift analysis are performed in order to ensure that there is no drift in the data over time by using statistical significance testing with a P-value lower or equal to 0.05.

In an embodiment, during the Al training phase, the pipeline comprises a prepossessing stage. In the preprocessing stage, features are selected based on exploratory data analysis with common statistical and cross-correlation analysis and on the significance level of the features based on the previous models. Correlated features or features with low significance level of previous models might be discarded.

In an embodiment, during the Al training phase, the pipeline comprises a transformation stage. In the transformation stage, the features are evaluated with and without normalization for the entire pipeline. Thereafter, the dataset is split into training, validation, and testing dataset.

In an embodiment, during the Al training phase, the pipeline comprises a data storage stage. where the features are stored for further analysis and assistance in model tracking.

In an embodiment, during the Al training phase, the pipeline comprises a model training stage. In the pipeline, the model training of a baseline model is performed without hyperparameter tuning, for one seasonal or harvesting period. The model is designed based on one of three potential architectures: a hybrid convolutional neural network (CNN) architecture that merges a CNN for image data with a fully connected network for the sensor data; a long short-term memory (LSTM) network for image data that merges a fully connected network for the sensor data; and a fully connected network with dense layers for all features and data points.

In an embodiment, during the model training stage, in the hybrid convolutional neural network (CNN) training model, the CNN for image data has a relatively shallow architecture with four 2D convolutional layers, with two layers with 64 filter nodes, and two layers with 128 filter nodes, all with 3x3 kernel size, and using ReLU activation function. These layers are followed by a batch normalization layer, max-pooling layer, a flatter layer to 1D, a fully connected dense layer with 512 neurons using ReLU activation, then a dropout layer for regularization using a dropout rate of 0.5 for minimizing overfitting. For the sensor data, a fully connected network is designed to process the sensor data separately with an input layer with the same dimension as the sensor data, a dense layer with 32 neurons, a ReLU activation, a batch normalization layer, a dropout layer with a dropout rate of 0.2 to reduce overfitting, another dense layer of 32 neurons, a ReLU activation, and a last batch normalization layer. Finally, the merge of the two networks is done by a merge layer connecting the output of the CNN and the dense network with 64 neurons and ReLU activation, followed by a batch normalization layer, a dropout layer with a dropout rate of 0.2, and the last output layer with the dimension of the target variable based on the context analysed, where one neuron with linear activation is enough for a pest monitoring, while, for instance, more neurons with softmax activation might be used for multi-stages of the growth stages estimation.

In an embodiment, during the model training stage, in the long short-term memory (LSTM) network training model, the LSTM is designed with two layers with 50 units, with batch normalization, and a dropout layer with a dropout rate of 0.2 for each LSTM layer. Then, a fully connected network and the merge of two networks follow the same design rules of the previous model proposed.

In an embodiment, during the model training stage, in the fully connected network (FCN) training model, 1D image features and data points measured is designed using an input layer with the exact dimension of the full data, a dense layer with 64 neurons each, with ReLU activation, followed by a batch normalization layer, a dropout layer for regularization with a dropout rate of 0.2 to prevent overfitting, a final dense layer also with 64 neurons, ReLU activation, and a batch normalization layer. The output layer follows the same design rule of the CNN and LSTM models, depending on the target variable, fitting the desired outcome, either growth or health conditions estimation.

In an embodiment, in the pipeline, after the baseline training, a tuned model is obtained by using the testing dataset in a k-fold cross-validation for accuracy maximization. Then, the validation dataset is used to evaluate the best model obtained.

In an embodiment, optionally, the architectures for the CNN, LSTM, and fully connected networks can be designed with more layers and neurons based on the insights from the testing and validation phases.

In an embodiment, in the final stage, the baseline and tuned models are stored with the performance metrics, corresponding dataset and features extracted for future analysis.

In an embodiment, upon completion of the Al training in the offline procedure (Fig. 12), the model becomes accessible for the online process as described in Figure 13. The Al predicts the error of the target variable for a set of data of the enclosed device (chamber data), thereby providing conditions for the optimizer to select control parameters during the device (chamber) control stage. Optimization algorithms such as Grid Search or Random Search are employed to identify an optimal point within a search space. The search space comprises the twin data, device data, and the target error, with the goal of minimizing said target error.

In an embodiment, the mapping function provides chamber parameters for the microcontroller of the enclosed device (smart chamber, which makes the target variables between the twin model and the chamber device close/similar to each other.

In an embodiment, the microcontroller of the enclosed device (smart chamber) implements parameters of the control strategy in the smart chamber, based on a proportional or proportional-integral controller, adjusting factors like temperature, humidity, lighting, and soil conditions to mirror the larger environment.

In an embodiment, in the real-time data monitoring stage, data is monitored and features are extracted, obtaining the target variable from the chamber in the same way is implemented in the digital twin modeling phase. Then, the chamber device data is provided for the data storage stage, and for the loops in the smart chamber control stage, and the mapping function stage.

In an embodiment, the outer layer of the chamber device is made of plastic or metal sheets.

In an embodiment, the inner layer (2) of the chamber device is made of polystyrene plastic.

In an embodiment, between the outer layer and the inner layer of the chamber device is an insulation material (3) like polyurethane foam is injected.

In an embodiment, the water tubes and the electrical connectors pass through the insulation material.

In an embodiment, the door of the device (4) contains an airtight rubber seal (4.1) or gasket that closes the gap between the door and the box.

In an embodiment, on one side of the inner structure layer of the device (2), there is a layer used as an air conduit (6.1) coming from the air inlet (6.2) where the ventilator (6.3) is fixed until the substrate level (8).

In an embodiment, the conduit (6.1) is made of the same plastic used in the inner layer and contains multiple holes (6.4) to disperse the air in the box equally.

In an embodiment, behind the inlet ventilator (6.3), a radiator containing the evaporator (6.5) of the air conditioning system (6) is also fixed inside the air inlet (6.2).

In an embodiment, behind the ventilator and the evaporator, a heating resistance (6.6) mounted in another radiator inside the air inlet (6.2) is installed.

In an embodiment, the quantity of air passing through the inlet is changed by adjusting an air valve (6.7) controlled by a servo motor (12.10) connected to the microcontroller (12.1).

In an embodiment, the air temperature is also monitored through the microcomputer/microcontroller (12.1) by controlling the inlet fan (6.3) speed, the heating resistance (6.6), and the air conditioning compressor (6.8).

In an embodiment, on the top of each growing layer on the other side of the device, a small hole (7.1) containing a carbon filter (7.2) extracts the air from the box, the carbon filter (7.2) is optional and is only used to filter the smell of the box.

In an embodiment, below the air inlet (6.2), an empty compartment (5) is used to stock a small irrigation or fertigation reservoir (9.1) that can be accessed from outside (9.2), the fertigation pump (9.3), and the electronic components, namely the microcontroller/ microcomputer (12.1), the communication module (12.2), LED driver (11.2), relays (12.4), and other electronics. This compartment of the box is not insulated from the outside, but from the inside, the insulation material (3) is applied in the wall between the compartment and the rest of the box.

In an embodiment, a ventilator (5.1) for cooling the electronics can be added if overheating occurs, and it is fitted on the outer side wall of the compartment.

In an embodiment, the bottom of the inside of the device contains two layers: an inclined layer (10.1) with a drain hole (10.2) at the lower side to evacuate the residual liquids and a flat layer (8) containing holes fitted on the top of the inclined layer where the seeds heat mat (8.2) and the substrate (8.1) are placed.

In an embodiment, the device optionally comprises a seeds heat mat that is needed only for some types of plants.

In an embodiment, two small mist nozzles (9.4) are mounted on the inner side walls of the box, they are used for irrigation or fertigation, and they spray downward in the substrate direction in a way to allow a uniform distribution of the liquid.

In an embodiment, air temperature, humidity, and CO2 sensors (12.5) are mounted on the inner wall of the box above the nozzles, and the substrate temperature and humidity sensors (12.6) are stuck into the substrate (8.1).

In an embodiment, the light intensity sensor (12.7) is mounted approximately at the plant level facing the top of the box and protected from humidity.

In an embodiment, the camera (12.8) is mounted on the inner side of the top of the box in the most central position.

In an embodiment, the LED lights (11.1) are mounted on the sides of the camera (12.8), the light spectrum of the LED varies depending on the plant type and the experiments, and the light intensity is monitored through the microcontroller/microcomputer (12.1).

In an embodiment, on the outside structure layer of the device, the air conditioning compressor (6.8), the expansion valve (6.11), the condenser (6.9), and the heat dissipation fan (6.10) are mounted on the back side of the box. The reservoir lid (9.2) is also fitted on the back side of the device.

In an embodiment, the LCD screen (12.9) is mounted on the top of the front side of the box. All the actuators and sensors are connected to the microcontroller/microcomputer (12.1), calibrated and adjusted by the user, and controlled and displayed on the computer. The LCD (12.9) can display current sensor readings, current actuator values, duration of the experiment, and other relevant information.

As an example, the system of the present disclosure can be used for performing experiments on small plants, especially microgreens. On the seeding tray inside the box, the user lays down a layer of substrate, spreads the seeds, then covers them with another layer of substrate and closes the box. The thickness of the substrate and the depth of the seeds is controlled by the user. Once the box is closed, it should not be opened before harvesting to avoid perturbation to the controlled environment, irrigation or fertigation is applied through the nozzles, and environmental monitoring through the microcontroller/microcomputer (12.1) begins. All the tasks related to the experiment are programmed beforehand in the microcontroller/microcomputer (12.1), and the monitoring of the experiment is also performed through the microcontroller/microcomputer (12.1) and on the computer.

The embodiments described above are combinable.

The following claims further set out particular embodiments of the disclosure.

## Claims

1. A plant growing system for modelling a farming environment, the system comprising:
an enclosed device for growing the plants for modelling the farming environment;
sensors placed in the farming environment for acquiring plant growth parameters data from the farming environment; and
a computer configured for simulating the farming environment with the acquired plant growth parameters data to obtain simulated plant growth parameters;
wherein the computer is further configured for mapping the simulated plant growth parameters to plant growth parameters of the enclosed device, and for applying the mapped parameters to the enclosed device.

2. The system according to the previous claim, wherein the plant growth parameters include temperature, humidity, light intensity, soil temperature, soil moisture, or combinations thereof.

3. The system according to any of the previous claims, wherein the mapping comprises applying a convolutional neural network (CNN), a long short-term memory network (LSTM), or a fully connected neural network (FCN), to input data to obtain the plant growth parameters of the enclosed device.

4. The system according to the previous claim, wherein the CNN or LSTM comprises two input layers: a first input layer for sensor data of the farming environment and a second input layer for image data corresponding to the farming environment; and the FCN comprises a combined input layer for sensor data of the farming environment and image data corresponding to the farming environment.

5. The system according to any of the previous claims, wherein the mapping comprises applying a predictive model of an error in a target variable predicted from simulated plant growth parameters and from plant growth parameters of the enclosed device, to obtain a measure of discrepancy between the farming environment and the enclosed device; in particular the predictive model comprising an image data input for receiving plant growth images from the farming environment and/or enclosed device.

6. The system according to the previous claim, further comprising one or more actuators for applying plant growth parameters to the enclosed device, wherein the computer is further configured for applying an optimizer to optimize plant growth parameters to be applied to the enclosed device, wherein the predicted error in the target variable is used as an input of said optimizer, which is configured for minimizing said error in the target variable by adjusting said plant growth parameters to be applied by said one or more actuators.

7. The system according to any of the previous claims, wherein the simulation is a digital twin simulation comprising:
an information layer comprising data acquired from the sensors placed on the farm environment;
a knowledge layer comprising organized data inputs acquired from the data acquired;
a twinning layer comprising a mathematical representation of the farm environment obtained using modelling.

8. The system according to the previous claim, wherein the data acquired from the sensors includes image data obtained from the farm environment, in particular wherein the image data comprises plant area, greenness, texture features, number of leaves, shape features, or combinations thereof, in particular the shape features comprising vegetation area perimeters, compactness, elongations, convexities and aspect ratios.

9. The system according to any of the previous claims, wherein the enclosed device comprises:
heating, ventilation and air conditioning system;
irrigation system, in particular the irrigation system comprising drainage, irrigation spray, irrigation pump, irrigation valves;
lights;
sensors;
communication means, in particular wireless communication means;
microcomputer.

10. The system according to any of the previous claims, wherein the device further comprises an outer layer, an inner layer, an insulation layer, and an uninsulated compartment.

11. The system according to any of the previous claims, wherein the device further comprises a camera for obtaining image data of plants growing in the enclosed device.

12. The system according to any of the previous claims, wherein the heating, ventilation and air conditioning system comprises heat dissipators, ventilators, air conditioners, air exhaust.

13. The system according to any of the previous claims, wherein the sensors comprise soil temperature sensors, soil moisture sensors, temperature sensors, humidity sensors, carbon dioxide sensor, light intensity sensor.

14. A method for growing plants in an enclosed device for modelling a farming environment, the method comprising:
acquiring plant growth parameters data from sensors placed in a farming environment;
simulating the farming environment with the acquired plant growth parameters data to obtain simulated plant growth parameters;
mapping the simulated plant growth parameters to obtain plant growth parameters of the enclosed device; and
applying the mapped parameters to the enclosed device.

15. The method according to claim 14, wherein the mapping is designed by convolutional neural network, long short-term memory network, or fully connected network.
